Europäisches Patentamt

European Patent Office

Office européen des brevets

(11) Veröffentlichungsnummer: **0 250 845 B1**

(19)

## (12) EUROPÄISCHE PATENTSCHRIFT

(45) Veröffentlichungstag der Patentschrift: **19.11.92**

(21) Anmeldenummer: **87107462.1**

(22) Anmeldetag: **22.05.87**

Teilanmeldung 91121427.8 eingereicht am 22/05/87.

(51) Int. Cl.⁵: **A23F 5/20**

### (54) Verfahren zur Entcoffeinierung von Rohkaffee.

(30) Priorität: **20.06.86 DE 3620622**
**25.04.87 DE 3713953**

(43) Veröffentlichungstag der Anmeldung:
**07.01.88 Patentblatt 88/01**

(45) Bekanntmachung des Hinweises auf die
Patenterteilung:
**19.11.92 Patentblatt 92/47**

(84) Benannte Vertragsstaaten:
**AT BE CH FR GB IT LI NL**

(56) Entgegenhaltungen:
DE-A- 2 450 978     DE-A- 3 318 317
DE-A- 3 445 502     FR-A- 2 360 260
US-A- 3 767 418     US-A- 3 989 850

ANGEWANDTE CHEMIE, Jahrgang 90, Heft
10, 1987, Seiten 747-755; G. WILKE:
"Extraktion mit überkritischen Gasen"

PROCESS ENGINEERING, September 1983,
Seiten 32-35; D.H. LOGSDAIL: "Applications
and prospects for supercritical extraction"

(73) Patentinhaber: **KOHLENSÄURE-WERKE RUD.**
**BUSE GMBH & CO.**
**Sprudelstrasse**
**W-5462 Bad Hönningen(DE)**

(72) Erfinder: **Ben-Nasr, Hedi, Dr.**
**Friedhofstrasse 32**
**W-4650 Gelsenkirchen(DE)**
Erfinder: **Coenen, Hubert, Dr.**
**Wortbergorde 13**
**W-4300 Essen 1(DE)**

(74) Vertreter: **Münzhuber, Robert, Dipl.-Phys. et al**
**Patentanwalt Rumfordstrasse 10**
**W-8000 München 5(DE)**

## Beschreibung

Die Erfindung betrifft ein Verfahren zur Entcoffeinierung von Rohkaffee gemäß dem Oberbegriff des Patentanspruchs 1. Ein derartiges Verfahren ist aus der DE 34 45 502 A1 bekannt.

Bei dem bekannten Verfahren wird so vorgegangen, daß die Entcoffeinierung bei einem Gasdruck über 200 bar und einer während des Entcoffeinierungsvorgangs auf über 70°C ansteigenden Temperatur erfolgt und daß anschließend das extrahierte Coffein von dem beladenen Gas bei tieferem, aber vorzugsweise noch überkritischem Druck abgetrennt wird, vorzugsweise durch Umkehrosmose mit wenigstens einer semipermeablen Membrane. Dieses Extraktionsverfahren beansprucht die Kaffeebohnen, insbesondere deren Zellstruktur, nicht unbeträchtlich, und darüberhinaus ist der Vorgang der Abtrennung des Coffeins aus dem damit beladenen Gas vergleichsweise aufwendig.

Weiterhin ist aus der DE 33 18 317 A1 ein Verfahren zum Aufschließen und Extrahieren von ätherische Bestandteile aufweisenden Stoffen aus natürlichen Produkten, wie Heilgewächsen, Gewürzen, Kaffee, Tee oder dergleichen, bekannt, bei dem die Produkte zusammen mit einer Extraktionsflüssigkeit, beispielsweise Wasser, für eine vorbestimmte Zeitdauer in einer Kammer einem hohen Gasdruck ausgesetzt werden, worauf unter schlagartigem Entspannen des Druckes das Produkt bzw. dessen Zellen innerhalb der Extraktionsflüssigkeit zum Zerplatzen gebracht wird. Dieses sogenannte Zellcracking-Verfahren beeinträchtigt somit die Zellstruktur der Kaffeebohnen derart, daß es zum Entcoffeinieren von Rohkaffee nicht einsetzbar ist.

Aufgabe der vorliegenden Erfindung ist es, das eingangs erwähnte Entcoffeinierungsverfahren so zu verbessern, daß eine weitgehende Schonung der Kaffeebohnen gewährleistet, insbesondere eine Denaturierung der weiteren Bestandteile des Rohkaffees vermieden ist, und daß das Verfahren besonders betriebssicher und wirtschaftlich durchgeführt werden kann, wobei trotzdem aber ein hoher Entcoffeinierungsgrad sichergestellt ist. Die Lösung dieser Aufgabe ergibt sich aus den kennzeichnenden Merkmalen des Patentanspruchs 1.

Der überraschende Erfolg dieses Druckwechselverfahrens ist u.a. darauf zurückzuführen, daß eine Reihe von Wirkungen auftreten, die sich in vorteilhafter Weise ergänzen. So wird durch das aufgenommene Wasser in den Zellen der Rohkaffeebohnen eine Wasser-Coffein-Lösung gebildet, die die Extraktion des Coffeins erleichtert. Die Extraktion anderer Stoffe, insbesondere derjenigen, die für die Aromabildung beim Rösten erforderlich sind, wird auf ein Minimum reduziert.

Durch das schnelle Entspannen des Gases erfolgt eine weitere Lockerung der gequollenen Bohnen. Außerdem bewirkt es durch die starke Volumenvergrößerung des in die Rohkaffeebohnenzelle diffundierten Gases einen Austreibeffekt der Coffein-Wasser-Lösung an die Rohbohnenoberfläche. Schließlich verhindert das in den Poren der Kaffeebohnen eingeschlossene und bei der Druckentlastung entweichende Gas, daß das an der Oberfläche der Kaffeebohnen angereicherte Coffein wieder in diese zurückdiffundiert.

Beim schnellen Abspülen der Kaffeebohnen werden in erster Linie die Stoffe - insbesondere Coffein - entfernt, die sich auf deren Oberfläche befinden. Durch anschließendes Zentrifugieren wird die in den Randbereichen der Kaffeebohnen verbliebene Wasser-Coffein-Lösung, die nicht vom Abspülvorgang erfaßt wurde, ausgeschleudert. Dadurch wird der Restcoffeingehalt stark reduziert, und zudem werden die Bohnen vorgetrocknet.

Das Verfahren kann nach der Erfindung besonders vorteilhaft in der Weise durchgeführt werden, daß die Extraktion bei einem Druck von 100 bis 200 bar und einer Temperatur von 20°C bis 80°C erfolgt, daß der zu extrahierende Rohkaffee einen Wassergehalt von 35 Gew.-% bis 50 Gew.-%, vorzugsweise einen Wassergehalt von 40 Gew.-%, aufweist, daß die Kaffeebohnen während oder unmittelbar nach der Druckentlastung mit warmen (60°C bis 65°C) Wasser abgespült werden und während des Abspülens gerührt werden, daß die extrahierten und abgespülten Rohkaffeebohnen zentrifugiert werden und daß aus allen anfallenden wässrigen Lösungen (Spülwasser und wässrige Lösung aus der Zentrifuge) das Coffein gewonnen wird, wobei das coffeinfreie, mit Rohkaffee-Inhaltsstoffen beladene Wasser zum Abspülen weiterer Rohkaffeebohnen im Kreislauf gefahren wird.

Die Standzeit der Druckatmosphäre beträgt je nach Kaffeesorte und gewünschtem Entcoffeinierungsgrad einige Minuten bis einige Stunden. Die Entspannung der Gasatmosphäre kann schlagartig, oder aber in wenigen Minuten erfolgen, wobei ein Einfrieren des eingesetzten feuchten Rohkaffees infolge der Expansionskühlung auszuschließen ist.

Ein effektives und gleichmäßiges Abspülen der Kaffeebohnen wird erreicht, wenn zur Vermeidung von nennenswerten Aromaverlusten in den Kaffeebohnen das mit Rohkaffee-Inhaltsstoffen, mit Ausnahme von Coffein, beladene Spülwasser auf 60°C bis 65°C vorgewärmt wird, und wenn die Kaffeebohnen während des Abspülens gerührt werden.

Ferner wurde gefunden, daß sich der Restcoffeingehalt um das Zwei- bis Vierfache reduziert, wenn die extrahierten und abgespülten Kaffeebohnen sofort zentrifugiert werden. Durch das Zentrifugieren werden die Kaffeebohnen zusätzlich vorgetrocknet, so daß beim anschließenden Trocknen Energie eingespart wird.

Der Gegenstand der Erfindung wird anhand von Ausführungsbeispielen näher erläutert.

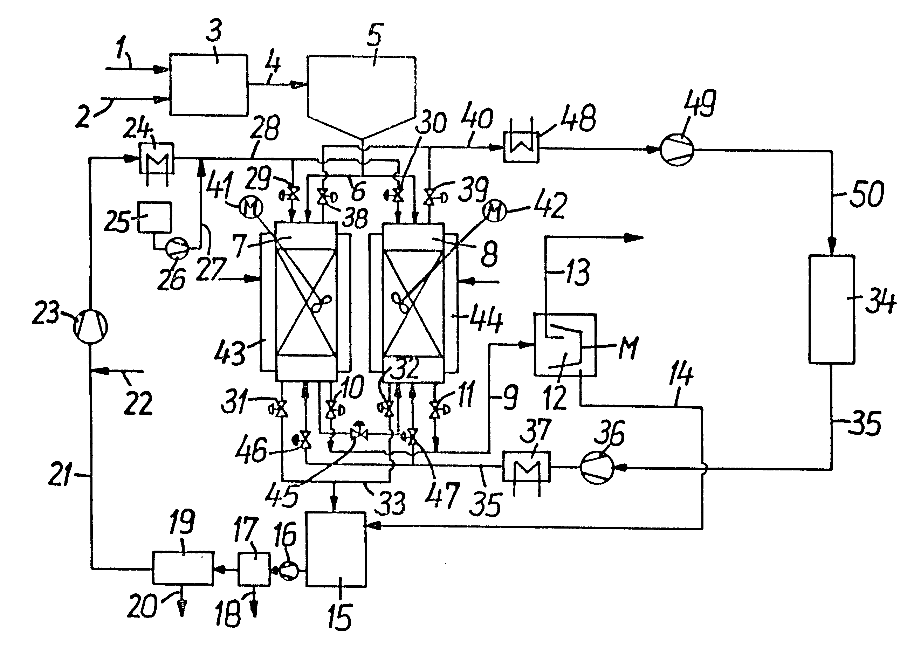

Auf der Zeichnung ist schematisch der Ablauf des Verfahrens zur Herstellung von entcoffeiniertem Rohkaffee dargestellt. Der Rohkaffee (8 Gew.-% bis 11 Gew.-% Naturfeuchte) wird dabei in einem Behälter 3 auf einen gewünschten Wassergehalt, vorzugsweise 40 Gew.-%, angefeuchtet und einem Vorratsbunker 5 zugeführt. Über eine Leitung 6 gelangt der feuchte Rohkaffee wahlweise in die Druckbehälter 7 und 8, die mit Heizmänteln 43 und 44 zur Thermostatisierung und Rührvorrichtungen 41 und 42 versehen sind. Die Druckatmosphäre im Druckbehälter wird mittels einer Pumpe 36 aufgebaut. Über eine Leitung 35 wird das Gas aus dem Gasvorrat 34 entnommen, mit Pumpe 36 auf Extraktionsdruck komprimiert, im Wärmetauscher 37 auf Extraktionstemperatur gebracht und über Ventile 46 bzw. 47 dem Druckbehälter 7 bzw 8 zugeführt. Bei Verwendung einer Mischung aus Wasser mit einem überkritischen Gas wird das coffeinfreie, mit Rohkaffee-Inhaltsstoffe beladene Wasser mittels der Pumpe 23 über den Wärmetauscher 24 und Ventil 29 bzw. 30 in den Druckbehälter 7 bzw. 8 gepumpt, bis der stationäre Druckzustand erreicht ist. Nach einer Standzeit, die von den zu verarbeitenden Kaffeesorten und dem gewünschten Entcoffeinierungsgrad abhängig ist, wird der unter Druck stehende Druckbehälter 7 in den drucklosen Behälter 8 über das Ventil 45 teilentspannt bzw. umgekehrt. Die weitere Entspannung auf $p_c \geq p \geq 1$ bar ($p_c$ = kritischer Druck des verwendeten Gases) erfolgt über das Ventil 38 bzw. 39, die Leitung 40, den Wärmetauscher 48 und der Pumpe 49 in den Gasvorratsbehälter 34. Der Wärmetauscher 48 hat die Aufgabe, das durch Expansionskühlung vorgekühlte Gas zu verflüssigen. Zum Absülen der Kaffeebohnen wird das ggf. mit Rohkaffee-Inhaltsstoffen beladene, in der Anlage 19 entcoffeinierte Spülwasser mittels der Pumpe 23 über den Wärmetauscher 24, der Leitung 28 und die Ventile 29 bzw. 30 in den Druckbehälter 7 bzw. 8 befördert. Über die Leitung 22 werden die Wasserverluste ersetzt. Über die Leitung 27 können mittels der Pumpe 26 dem Spülwasser weitere Aromastoffe zudosiert werden, die in der Regel im Rohkaffee vorkommen, wodurch die Extraktion der Stoffe, die beim Rösten für die Aromabildung erforderlich sind, auf ein Minimum reduziert wird. Während dieses Spülvorganges, der mehrmals wiederholt werden kann, werden die Kaffeebohnen mit Hilfe der Rührvorrichtung 41, 42 gerührt. Über Ventile 31, 32 und die Leitung 33 wird das Spülwasser dem Druckbehälter 7, 8 entnommen und dem Sammelbehälter 15 zugeführt. Aus diesem Behälter wird die Coffein-Wasserlösung mittels der Pumpe 16 über den Filter 17 in die Entcoffeinierungsanlage 19 befördert, wo in konventioneller Weise Coffein gewonnen wird. Der Vorgang des Unterdruckbringens, Entlastens und Abspülens kann gegebenenfalls mehrmals wiederholt werden. Anschließend wird der feuchte Rohkaffee in einer nachgeschalteten Zentrifuge 12 behandelt, und die hierbei anfallende Wasser-Coffeinlösung über eine Leitung 14 dem Behälter 15 zugeführt. Der entcoffeinierte Rohkaffee wird der Zentrifuge über die Leitung 13 entnommen, auf einen für die nachfolgende Röstung notwendigen minimalen Wassergehalt gebracht und anschließend geröstet. Wegen der in der Regel recht unterschiedlichen Coffeingehalte der an zwei Stellen im Prozeß anfallenden Wasser-Coffein-Lösungen könnte sich auch eine getrennte Coffeingewinnung aus diesen Massenströmen als wirtschaftlich sinnvoll erweisen.

Beispielsweise wurden nach diesem Verfahrensschema 394 g Rohkaffee (ungeröstete Bohnen) mit einem Coffeingehalt von 1,4 Gew.-% mit Wasser auf einen Wassergehalt von 40,9 Gew.-% angefeuchtet. Der feuchte Rohkaffee wurde in einem mit Rührer versehenen Druckbehälter gegeben. Bei einer Temperatur von 60°C wurde Kohlendioxid in den Druckbehälter befördert, bis ein Druck von 60 bar erreicht war. Anschließend wurde Wasser dazugepumpt, bis sich ein Druck von 100 bar eingestellt hatte. Der angefeuchtete Rohkaffee wurde stationär unter einer Wasser-Kohlendioxid-Atmosphäre von 100 bar bei der Temperatur von 60°C vier Stunden gehalten, wobei im Abstand von 15 Minuten kurz gerührt worden ist. Anschließend wurde in wenigen Minuten auf Normaldruck entspannt. Das Wasser wurde unten abgenommen, und die Kaffeebohnen wurden mit 2 l Wasser (65°C) abgespült. Während des Abspülvorgangs, der dreimal wiederholt wurde, wurden die Kaffeebohnen gerührt. Ein Teil des so behandelten Rohkaffees ist eine halbe Stunde bei 5.000 U/min zentrifugiert worden, wobei 8,2 Gew.-% Wasser, bezogen auf den eingesetzten feuchten Rohkaffee, entfernt worden sind. Der Rest-Coffeingehalt der nicht zentrifugierten Kaffeebohnen betrug 0,23 Gew.-%, der Rest-Coffeingehalt der zentrifugierten Bohnen lediglich 0,08 Gew.-%. Der Entcoffeinierungsgrad war damit 77,9% Bwz. 92,3%.

In einem weiteren Ausführungsbeispiel des Verfahrens gemäß der Erfindung wurden 394 g Rohkaffee (ungeröstete Bohnen) mit einem Coffeingehalt von 1,04 Gew.-% angefeuchtet. Der feuchte Rohkaffee wurde in einen mit Rührer versehenen Druckbehälter gegeben. Bei einer Temperatur von 60°C wurde Kohlendioxid in den Druckbehälter befördert, bis ein Druck von 200 bar erreicht war. Der angefeuchtete Rohkaffee wurde dann stationär unter einer $CO_2$-Druckatmosphäre von 200 bar bei der Temperatur von 60°C 45 Minuten gehalten, wobei im Abstand von 5 Minuten kurz gerührt worden ist. Anschließend wurde der Rohkaffee in wenigen Minuten auf Normaldruck entspannt. Die Kaffeebohnen wurden danach sofort mit 2 l Wasser (57° C) abgespült. Während des Spülvorgangs, der dreimal wiederholt wurde, wurden die Kaffeebohnen gerührt. Der Vorgang des Unterdruckbringens, Entspannens und Abspülens ist insgesamt dreimal wiederholt worden. Anschließend wurde ein Teil des so behandelten Rohkaffees eine halbe Stunde bei 5.000 U/min zentrifugiert, wobei 6,8 Gew.-%, bezogen auf den eingesetzten feuchten Rohkaffee, entfernt worden sind. Der Coffeingehalt der nicht zentrifugierten Kaffeebohnen betrug 0,26 Gew.-% und der Coffeingehalt der zentrifugierten Bohnen 0,25 Gew.-%. Der Entcoffeinierungsgrad betrug damit 75,0 Gew.-% bzw. 75,96 Gew.-%.

**Patentansprüche**

1. Verfahren zur Entcoffeinierung von Rohkaffee, bei dem das Coffein in einer wässrigen Lösung in der Bohnenzelle vorliegend mit Hilfe eines überkritischen, unter Normalbedingungen (1 bar, 20° C) gasförmigen Mediums dem Rohkaffee entzogen wird, dadurch gekennzeichnet, daß

der zu entcoffeinierende Rohkaffee auf einen Wassergehalt von 35 Gew.-% bis 50 Gew.-% angefeuchtet wird,

der angefeuchtete Rohkaffee unter einer Gas-Atmosphäre von 75 bar bis 300 bar bei einer Temperatur von 20° C bis 80° C einige Minuten bis einige Stunden gehalten wird,

die Gasatmosphäre schlagartig oder in wenigen Minuten auf $p_c \geq p \geq 1$ bar ($p_c$ = kritischer Druck des verwendeten Gases) entspannt wird in einer Weise, die ein Einfrieren des eingesetzten feuchten Rohkaffees infolge der Expansionskühlung des Gases ausschaltet,

die entspannten Rohkaffeebohnen mit Wasser abgespült werden, wobei die sich an der Bohnenoberfläche und in den Randzonen der Rohkaffeebohnen konzentrierte Coffein-Wasserlösung im Spülwasser in Lösung begibt und von der Rohbohne wegtransportiert wird,

der Vorgang des Unterdruckbringens, Entlastens und Abspülens des Rohkaffees mehrmals wiederholt wird,

der Spülvorgang mit Wasser nach Druckentlastung mehrmals wiederholt wird,

das Spülwasser aufgefangen wird und aus dem Spülwasser das in ihm gelöste Coffein in bekannter Weise gewonnen wird,

der Rohkaffee anschließend zur Abtrennung noch merklicher Restwasser-Coffeinlösungsmengen in einer nachgeschalteten Zentrifuge behandelt wird, und daß die hierbei anfallende Wasser-Coffeinlösung in gleicher Weise wie oben zur Gewinnung des Coffeins behandelt wird,

der noch mit merklichen Restgehalten an Wasser beladene Rohkaffee durch Trocknung auf einen für die nachfolgende Röstung notwendigen minimalen Wassergehalt gebracht wird,

der entcoffeinierte und vorgetrocknete Kaffee geröstet wird.

2. Verfahren nach Anspruch 1, dadurch gekennzeichnet, daß der zu entcoffeinierende Rohkaffee einen Wassergehalt von 40 Gew.-% aufweist.

3. Verfahren nach einem der Ansprüche 1 oder 2, dadurch gekennzeichnet, daß zum Aufbau der Gasatmosphäre Kohlendioxid verwendet wird.

4. Verfahren nach einem der Ansprüche 1 oder 2, dadurch gekennzeichnet, daß zum Aufbau der Druckatmosphäre eine Mischung aus Wasser und Kohlendioxid verwendet wird.

5. Verfahren nach einem der Ansprüche 1 oder 2, dadurch gekennzeichnet, daß zum Aufbau der Druckatmosphäre ein Gas verwendet wird, welches sich hinsichtlich seiner thermodynamischen Eigenschaften so verhält, daß es in merklichen Konzentrationen in die mit der Wasser-Coffeinlösung gefüllten Rohbohnenzellen diffundiert.

6. Verfahren nach einem der Ansprüche 1 oder 2 und 5, dadurch gekennzeichnet, daß zum Aufbau der Druckatmosphäre eine Mischung aus Wasser mit diesem beliebigen Gas verwendet wird.

7. Verfahren nach einem der Ansprüche 1 bis 6, dadurch gekennzeichnet, daß die Gasdruckatmosphäre vorzugsweise zwischen 100 bar und 200 bar und die Temperatur vorzugsweise zwischen 31 °C und 80 °C liegt.

8. Verfahren nach einem der Ansprüche 1 bis 7, dadurch gekennzeichnet, daß die Standzeit der Druckatmosphäre einige Minuten bis einige Stunden beträgt.

9. Verfahren nach einem der Ansprüche 1 bis 8, dadurch gekennzeichnet, daß während oder nach der Druckentlastung die Rohkaffeeschüttung mit Wasser ein- oder mehrmals abgespült wird.

10. Verfahren nach einem der Ansprüche 1 bis 9, dadurch gekennzeichnet, daß das bei der Spülung des Rohkaffees ablaufende, mit Coffein beladene Wasser aufgefangen und in bekannter Weise zur Gewinnung von Roh- oder Reincoffein behandelt wird.

11. Verfahren nach einem der Ansprüche 1 bis 10, dadurch gekennzeichnet, daß der Rohkaffee pulsierend mehrmals unter eine stationäre Gasatmosphäre gebracht wird, und daß nach jeder Druckentlastung der Rohkaffee ein- oder mehrmals mit Wasser abgespült wird.

12. Verfahren nach einem der Ansprüche 1 bis 11, dadurch gekennzeichnet, daß der Spülvorgang mit Wasser bei einer Temperatur von vorzugsweise 60 ° C bis 65 ° C durchgeführt wird.

13. Verfahren nach einem der Ansprüche 9 bis 12, dadurch gekennzeichnet, daß die Rohkaffeebohnen während des Abspülens gerührt werden.

14. Verfahren nach einem der Ansprüche 9 bis 13, dadurch gekennzeichnet, daß das zum Spülen des Rohkaffees verwendete Wasser mit einem oder mehreren wasserlöslichen Rohkaffee-Inhaltsstoffen beladen ist, um einen Inhaltsstoffverlust beim Abspülen des Rohkaffees zu vermeiden.

15. Verfahren nach einem der Ansprüche 9 bis 14, dadurch gekennzeichnet, daß das in herkömmlicher Weise entcoffeinierte Wasser zum erneuten Spülen im Kreislauf geführt wird.

16. Verfahren nach Anspruch 15, dadurch gekennzeichnet, daß das zum Spülen des Rohkaffees im Kreislauf geführte Wasser zwecks Abtrennung gegebenenfalls mitgerissener Schwebstoffe filtriert wird.

17. Verfahren nach einem der Ansprüche 1 bis 16, dadurch gekennzeichnet, daß der Rohkaffee anschließend zur mechanischen Abtrennung von einer Wasser-Coffein-Restlösung zentrifugiert wird.

18. Verfahren nach Anspruch 17, dadurch gekennzeichnet, daß die Wasser-Coffein-Restlösung einem üblichen Gewinnungsprozeß für Coffein unterzogen wird.

19. Verfahren nach einem der Ansprüche 1 bis 18, dadurch gekennzeichnet, daß für die Durchführung des Gesamtprozesses mehrere Druckautoklaven in Kaskadenschaltung verwendet werden.

20. Verfahren nach einem der Ansprüche 1 bis 19, dadurch gekennzeichnet, daß eine Teil-Druckentlastung eines Reaktors in einen zweiten Reaktor durch Druckausgleich erfolgt, wodurch das gasförmige Lösungsmittel teilweise zurückgewonnen wird.

21. Verfahren nach einem der Ansprüche 1 bis 20, dadurch gekennzeichnet, daß die bei der Restentspannung aus dem Druckreaktor austretenden Gase rekomprimiert und im Kreislauf geführt werden.

## Claims

1. Process for the decaffeination of raw coffee in which the caffeine present in an aqueous solution in the bean cell is removed from the raw coffee with the aid of a supercritical medium which is gaseous under normal conditions (1 bar, 20 ° C), characterised in that
   - the raw coffee to be decaffeinated is moistened to a water content of from 35% by weight to 50% by weight
   - the moistened raw coffee is kept under a gas atmosphere of 75 bar to 300 bar at a temperature of 20 ° C to 80 ° C for a few minutes to a few hours
   - the gas atmosphere is released in sudden bursts or in a few minutes to $p_c \geq p \geq 1$ bar ($p_c$ = critical pressure of the gas used in such a way that freezing of the used wet raw coffee due to the expansion cooling of the gas is prevented
   - the released raw coffee beans are rinsed with water and the caffeine-water solution in the rinsing water concentrated on the bean surface and in the edge zones of the raw coffee beans goes into solution and is transported away from the raw bean
   - the process of bringing the raw coffee under pressure, releasing it and rinsing it is repeated several times
   - the rinsing process is repeated several times with water after pressure release
   - the rinsing water is collected and the caffeine dissolved in it is recovered from the rinsing water in known manner
   - the raw coffee is then treated in a subsequently connected centrifuge to separate still visible amounts of residual water-caffeine solution, and the water-caffeine solution thus obtained is treated in a similar way to above to recover the caffeine
   - the raw coffee still charged with visible residual amounts of water is brought by drying to a minimal water content necessary for the subsequent roasting and
   - the decaffeneated and pre-dried coffee is roasted.

2. Process according to claim 1, characterised in that the raw coffee to be decaffeinated has a water content of 40% by weight.

3. Process according to one of claims 1 or 2, characterised in that carbon dioxide is used to build up the gas atmosphere.

4. Process according to one of claims 1 or 2, characterised in that a mixture of water and carbon dioxide is used to build up the pressure atmosphere.

5. Process according to one of claims 1 or 2, characterised in that to build up the pressure atmosphere a gas is used which behaves in such a way with respect to its thermodynamic properties that it diffuses in noticeable concentrations into the raw bean cells filled with the water-caffeine solution.

6. Process according to one of claims 1 or 2 and 5, characterised in that to build up the pressure atmosphere a mixture of water and this gas is used.

7. Process according to one of claims 1 to 6, characterised in that the gas pressure atmosphere is preferably between 100 bar and 200 bar and the temperature is preferaby between 31°C and 80°C.

8. Process according to one of claims 1 to 7, characterised in that the duration of the pressure atmosphere is a few minutes to a few hours.

9. Process according to one of claims 1 to 8, characterised in that during or after pressure release the raw coffee bulk is rinsed once or several times with water.

10. Process according to one of claims 1 to 9, characterised in that the caffeine-charged water, flowing when the raw coffee is rinsed, is collected and treated in known manner to recover raw or pure caffeine.

11. Process according to one of claims 1 to 10, characterised in that the raw coffee is brought intermittently several times under a steady gas atmosphere and in that after each pressure release the raw coffee is rinsed once or several times with water.

12. Process according to one of claims 1 to 11, characterised in that the rinsing process is carried out with water at a temperature of preferably 60°C to 65°C.

13. Process according to one of claims 9 to 12, characterised in that the raw coffee beans are stirred during the rinsing.

14. Process according to one of claims 9 to 13, characterised in that the water used to rinse the raw coffee is charged with one or several water-soluble raw coffee components so as to avoid a loss of components during rinsing of the raw coffee.

15. Process according to one of claims 9 to 14, characterised in that the water decaffeinated in conventional manner is conveyed into the cycle for repeated rinsing.

16. Process according to claim 15, characterised in that the water conveyed into the cycle for rinsing the raw coffee is filtered to separate possibly entrained suspended substances.

17. Process according to one of claims 1 to 16, characterised in that the raw coffee is then centrifuged for the mechanical separation of a water-caffeine-residual solution.

18. Process according to claim 17, characterised in that the water-caffeine residual solution is subjected to a conventional recovery process for caffeine.

19. Process according to one of claims 1 to 18, characterised in that several pressure autoclaves in tandem are used for carrying out the whole process.

20. Process according to one of claims 1 to 19, characterised in that a partial pressure release of one reactor into a second reactor is effected by pressure equalisation, whereby the gaseous solvent is partially recovered.

21. Process according to one of claims 1 to 20, characterised in that the gases emerging from the pressure reactor during residual release are recompressed and conveyed in the cycle.

**Revendications**

1. Procédé de décaféination de café vert, dans lequel la caféine, présente dans une solution aqueuse dans la cellule du grain, est extraite du café vert à l'aide d'un milieu surcritique, gazeux dans les conditions normales (1 bar, 20°C), caractérisé en ce que

le café vert à décaféiner est humecté jusqu'à une teneur en eau de 35% en poids à 50% en poids,

le café vert humecté est maintenu pendant une période de quelques minutes à quelques heures dans une atmosphère de gaz de 75 bar à 300 bar à une température de 20°C à 80°C,

l'atmosphère de gaz est détendue brusquement ou en quelques minutes à $p_c \geqq p \geqq 1$ bar ($p_c$ = pression critique du gaz utilisé), d'une manière qui exclut une congélation du café vert humide mis en oeuvre en conséquence du refroidissement par expansion du gaz,

les grains de café vert détendus sont lavés à l'eau, la solution de caféine dans l'eau, concentrée sur la surface des grains et dans les zones voisines des bords des grains de café vert, entrant en solution dans l'eau de lavage et étant entrainée à partir du grain vert,

le traitement de mise sous pression, de détente et de lavage du café vert est repété plusieurs fois,

le traitement de lavage à l'eau après la détente de pression est répété plusieurs fois,

l'eau de lavage est recueillie et, à partir de l'eau de lavage, la caféine qui y est dissoute est récupérée de façon connue en soi,

le café vert est ensuite traité dans une centrifugeuse intercalée à la suite, pour la séparation de quantités encore appréciables de solution de caféine dans l'eau résiduelle, et la solution de caféine dans l'eau ainsi obtenue est traitée comme indiqué ci-dessus pour la récupération de la caféine,

le café vert encore chargé de quantités résiduelles appréciables d'eau est amené par séchage à une teneur en eau minimale nécessaire pour la torréfaction consécutive, et

le café décaféiné et pré-séché est torréfié.

2. Procédé selon la revendication 1, caractérisé en ce que le café vert à décaféiner a une teneur en eau de 40% en poids.

3. Procédé selon la revendication 1 ou 2, caractérisé en ce que de l'anhydride carbonique est utilisé pour la création de l'atmosphère de gaz.

4. Procédé selon la revendication 1 ou 2, caractérisé en ce qu'un mélange d'eau et d'anhydride carbonique est utilisé pour la création de l'atmosphère sous pression.

5. Procédé selon la revendication 1 ou 2, caractérisé en ce qu'on utilise, pour la création de l'atmosphère sous pression, un gaz dont les propriétés thermodynamiques sont telles que, dans des concentrations appréciables, il se comporte en diffusant dans les cellules des grains verts remplies de solution de caféine dans l'eau.

6. Procédé selon les revendications 1 ou 2 et 5, caractérisé en ce qu'on utilise, pour la création de l'atmosphère sous pression, un mélange d'eau avec ce gaz quelconque.

7. Procédé selon l'une quelconque des revendications 1 à 6, caractérisé en ce que l'atmosphère de gaz sous pression se trouve de préférence a une pression de 100 bar à 200 bar et la température est comprise de préférence entre 31°C et 80°C.

8. Procédé selon l'une quelconque des revendications 1 à 7, caractérisé en ce que la durée d'application de l'atmosphère sous pression est comprise entre quelques minutes et quelques heures.

9. Procédé selon l'une quelconque des revendications 1 à 8, caractérisé en ce que, pendant ou après la détente de pression, la charge en vrac de café vert est lavée une ou plusieurs fois à l'eau.

10. Procédé selon l'une quelconque des revendications 1 à 9, caractérisé en ce que l'eau chargée de caféine qui résulte du lavage du café vert est recueillie et traitée de façon connue en soi pour la récupération de caféine brute ou pure.

11. Procédé selon l'une quelconque des revendications 1 à 10, caractérisé en ce que le café vert est mis plusieurs fois en pulsation dans une atmosphère de gaz stationnaire, et en ce qu'après chaque détente de pression, le café vert est lavé une ou plusieurs fois à l'eau.

12. Procédé selon l'une quelconque des revendications 1 à 11, caractérisé en ce que le traitement de lavage à l'eau est effectué à une température comprise de préférence entre 60°C et 65°C.

13. Procédé selon l'une quelconque des revendications 9 à 12, caractérisé en ce que les grains de café vert sont agités pendant le lavage.

14. Procédé selon l'une quelconque des revendications 9 à 13, caractérisé en ce que l'eau utilisée pour le lavage du café vert est chargée d'un ou de plusieurs constituants hydrosolubles du café vert, afin d'éviter une perte de ces constituants au cours du lavage du café vert.

**15.** Procédé selon l'une quelconque des revendications 9 à 14, caractérisé en ce que l'eau décaféinée de façon classique est recyclée pour un nouveau lavage.

**16.** Procédé selon la revendication 15, caractérisé en ce que l'eau recyclée pour le lavage du café vert est filtrée, afin de séparer les matières en suspension éventuellement entraînées.

**17.** Procédé selon l'une quelconque des revendications 1 à 16, caractérisé en ce que le café vert est ensuite centrifugé en vue de la séparation mécanique d'une solution résiduelle de caféine dans l'eau.

**18.** Procédé selon la revendication 17, caractérisé en ce que la solution résiduelle de caféine dans l'eau est soumise à un traitement usuel de récupération de la caféine.

**19.** Procédé selon l'une quelconque des revendications 1 à 18, caractérisé en ce que plusieurs autoclaves à pression, reliés en cascade, sont utilisés pour l'exécution de l'ensemble du traitement.

**20.** Procédé selon l'une quelconque des revendications 1 à 19, caractérisé en ce qu'une détente de pression partielle d'un réacteur est effectuée par égalisation de pression dans un second réacteur, de sorte que le solvant gazeux soit récupéré en partie.

**21.** Procédé selon l'une quelconque des revendications 1 à 20, caractérisé en ce que les gaz qui sortent du réacteur à pression au cours de la détente résiduelle sont recomprimes et recyclés.

EP 0 250 845 B1